# EUROPÄISCHE PATENTSCHRIFT

(11) **EP 2 384 239 B1**
(45) Veröffentlichungstag und Bekanntmachung des Hinweises auf die Patenterteilung: **14.11.2012**
(21) Anmeldenummer: 09796751.7
(22) Anmeldetag: 28.12.2009
(51) Int. Cl.: B01J 23/46, B01J 23/96, C01B 7/04, B01J 38/30, B01J 38/44

(54) **VERFAHREN ZUR REGENERIERUNG EINES RUTHENIUMOXID ENTHALTENDEN KATALYSATORS FÜR DIE CHLORWASSERSTOFF-OXIDATION**
METHOD FOR REGENERATING A CATALYST CONTAINING RUTHENIUM OXIDE FOR HYDROGEN CHLORIDE OXIDATION
PROCÉDÉ DE RÉGÉNÉRATION D'UN CATALYSEUR CONTENANT DE L'OXYDE DE RUTHÉNIUM POUR L'OXYDATION DU CHLORURE D'HYDROGÈNE

(30) Priorität: 30.12.2008 EP 08173097
(43) Veröffentlichungstag der Anmeldung: 09.11.2011
(73) Patentinhaber: BASF SE, 67056 Ludwigshafen (DE)
(72) Erfinder: HENZE, Guido, 68642 Bürstadt (DE); URTEL, Heiko, 67227 Frankenthal (DE); SESING, Martin, 67165 Waldsee (DE); KARCHES, Martin, 67434 Neustadt (DE); FEHREN, Thorsten von, 68642 Bürstadt (DE); KUSTURA, Toni, 67316 Carlsberg (DE)
(86) Internationale Anmeldenummer: PCT/EP2009/067938
(87) Internationale Veröffentlichungsnummer: WO 2010/076296

(56) Entgegenhaltungen:
- EP-A1- 0 761 593
- DE-A1- 19 634 192
- JP-A- 2007 007 521
- Crihan, Daniela: "HCl-Oxidation auf RuO2(110): Neuartiger Deacon-Prozess" 13. Mai 2008 (2008-05-13), Justus-Liebig-Universität Giessen: Dissertation November 2007 , Giessen (DE) , XP002582656 URL: http://geb.uni-giessen.de/geb/volltexte/20 08/6068/pdf/CrihanDaniela-2008-05-13.pdf Seiten 23-28; Abbildung 3.4 Seiten 65-100

## Beschreibung

Die Erfindung betrifft ein Verfahren zur Regenerierung eines Rutheniumoxid enthaltenden Katalysators für die Chlorwasserstoff-Oxidation sowie ein Verfahren zur Chlorwasserstoff-Oxidation umfassend die Regenerierung des Katalysators.

In dem von Deacon 1868 entwickelten Verfahren der katalytischen Chlorwasserstoff-Oxidation wird Chlorwasserstoff mit Sauerstoff in einer exothermen Gleichgewichtsreaktion zu Chlor oxidiert. Durch Überführung von Chlorwasserstoff in Chlor kann die Chlorherstellung von der Natronlaugeherstellung durch Chloralkalielektrolyse entkoppelt werden. Eine solche Entkoppelung ist attraktiv, da weltweit der Chlorbedarf stärker als die Nachfrage nach Natronlauge wächst. Zudem fällt Chlorwasserstoff in großen Mengen beispielsweise bei Phosgenierungsreaktionen, etwa bei der IsocyanatHerstellung, als Koppelprodukt an.

Ein häufig für die Chlorwasserstoffoxidation eingesetzter Katalysator enthält Rutheniumoxid RuO₂ auf einem inerten Trägermaterial. Übliche inerte Trägermaterialien sind Oxide von Aluminium, Silicium und Titan, beispielsweise alpha-Al₂O₃. Die Aktivität dieses Katalysators hängt von der Größe der RuO₂-Partikel auf dem Träger ab. Je kleiner die Partikel sind, desto aktiver ist der Katalysator aufgrund der größeren spezifischen Oberfläche der aktiven Komponente. Mit zunehmender Standzeit unter Reaktionsbedingungen unterliegt der Katalysator einer Alterung, welche unter anderem auf das Wachstum der RuO₂-Kristallite zurückgeführt werden kann. Dieses Wachstum resultiert aus der Migration der RuO₂-Partikel auf der Oberfläche des Katalysatorträgers. Ab einer bestimmten Kristallitgröße ist der Katalysator soweit deaktiviert, dass er auch bei Temperaturerhöhung nicht mehr den gewünschten Umsatz erbringen kann.

JP-A 2007-7521 beschreibt ein Verfahren zur Reaktivierung eines Rutheniumoxid enthaltenden Chlorwasserstoff-Oxidationskatalysators, bei dem der deaktivierte Katalysator bei 200 bis 400 °C mit Sauerstoff oder einem Inertgas, das keine oxidierenden oder reduzierenden Eigenschaften und weder saure noch basische Eigenschaften aufweist, in Kontakt gebracht wird. Als Inertgase werden Wasserdampf, Stickstoff, Argon und Helium genannt. In einem Ausführungsbeispiel wird ein Katalysator, der Rutheniumoxid auf einem Gemisch aus Aluminiumoxid und Titandioxid enthält, zur Reaktivierung bei einer Temperatur von ca. 280 °C mit reinem Sauerstoff behandelt. In einem weiteren Ausführungsbeispiel wird der Katalysator zur Reaktivierung bei ca. 280 °C mit Stickstoff behandelt. Gemäß JP-A 2007-7521 wird zwischen der Behandlung des Katalysators mit Chlorwasserstoff zur Simulation der Deaktivierung des Katalysators und der Behandlung mit reinem Sauerstoff noch ein Chlorwasserstoff-Oxidationsschritt zur Evaluierung des Katalysators durchgeführt. Für das Deacon-Verfahren im regulären Betrieb wird also eine periodische Reaktivierung mit entweder einem Sauerstoff enthaltenen Gasstrom oder einem Inertgasstrom offenbart. Der in den Beispielen verwendete Chlorwasserstoff-Strom wird als den Katalysator deaktivierend beschrieben und ist für die periodische Regenerierung im regulären Betrieb somit nicht vorgesehen.

EP 0 761 593 A1 offenbart ein Verfahren zur Herstellung von Chlor, bei dem in einem Schritt a) der Katalysator mit Chlorwasserstoff bei 300 bis 420 °C beladen und anschließend in einem Schritt b) mit einem Sauerstoff enthaltenen Gas bei 370 bis 460 °C unter Freisetzung von Chlor regeneriert wird. Als Katalysator offenbart Sinterformteile aus Oxiden oder Chloriden von Cu, Fe, Ru, Ce, Bi, Ni, Co, Ga und Nd, und keramischen oder silikatischen Trägern oder Glasträgern. In den Beispielen werden kupferhaltige Katalysatoren verwendet.

Daniela Crihan: "HCl-Oxidation auf RuO2(110): Neuartiger Deacon-Prozess", Justus-Liebig-Universität Gießen: Dissertation November 2007 offenbart einen RuO₂(110)-Film auf elementarem Ruthenium als Trägermaterial und hat Untersuchungen der durch Chlorwasserstoff auf RuO₂(110) induzierten Veränderungen des Katalysators und zum mikroskopischen Reaktionsmechanismus zum Gegenstand. Untersucht werden die Elementarschritte der Deacon-Reaktion, d.h. die Wechselwirkung mit gasförmigem HCl und nachfolgend mit Sauerstoff.

Aufgabe der Erfindung ist es, ein einfaches Verfahren zur Regenerierung eines zumindest teilweise deaktivierten Chlorwasserstoff-Oxidationskatalysators enthaltend Rutheniumoxid auf einem Trägermaterial bereitzustellen. Das Verfahren soll vorzugsweise in dem Chlorwasserstoff-Oxidationsreaktor selbst durchführbar sein.

Gelöst wird die Aufgabe durch ein Verfahren zur katalytischen Chlorwasserstoffoxidation mit den Schritten
i) Einspeisung eines Chlorwasserstoff enthaltenden Stroms und eines Sauerstoff enthaltenden Stroms in einen Oxidationsreaktor, der einen Chlorwasserstoff-Oxidationskatalysator enthaltend Rutheniumoxid auf einem Trägermaterial enthält, und Oxidation von Chlorwasserstoff zu Chlor an dem Katalysator, bis der Katalysator eine verringerte Aktivität aufweist,
ii) Regenerierung des Katalysators umfassend die Schritte
   a) Reduzieren des Katalysators in einem Gasstrom enthaltend Chlorwasserstoff und gegebenenfalls ein Inertgas bei einer Temperatur von 100 bis 800 °C, bevorzugt 300 bis 500°C,
   b) Recalcinieren des Katalysators in einem Sauerstoff enthaltenden Gasstrom bei einer Temperatur von 150 bis 800 °C, bevorzugt 200 bis 450°C,
iii) Fortsetzung der Oxidation von Chlorwasserstoff zu Chlor entsprechend Schritt i) an dem in Schritt ii) erhaltenen regenerierten Katalysator.

Es wurde gefunden, dass sich RuO₂ mit Chlorwasserstoff reduzieren lässt. Es wird angenommen, dass die Reduktion über RuCl₃ bis zum elementaren Ruthenium erfolgt. Behandelt man also einen teilweise deaktivierten rutheniumoxidhaltigen Katalysator mit Chlorwasserstoff, so wird vermutlich nach einer ausreichend langen Behandlungszeit Rutheniumoxid quantitativ zu Ruthenium reduziert. Durch diese Reduktion werden die RuO₂-Kristallite zerstört und wird das Ruthenium, welches als elementares Ruthenium, als Gemisch aus Rutheniumchlorid und elementarem Ruthenium, oder als Rutheniumchlorid vorliegen kann, auf dem Träger redispergiert. Nach der Reduktion lässt sich das Ruthenium wieder mit einem sauerstoffhaltigen Gas, beispielsweise mit Luft, zum katalytisch aktiven RuO₂ reoxidieren. Es wurde gefunden, dass der so erhaltene Katalysator wieder annähernd die Aktivität des frischen Katalysators aufweist. Ein Vorteil des Verfahrens liegt darin, dass der Katalysator *in situ* im Reaktor regeneriert werden kann und nicht ausgebaut werden muss.

In dem auch als Deacon-Prozess bekannten katalytischen Verfahren wird Chlorwasserstoff mit Sauerstoff in einer exothermen Gleichgewichtsreaktion zu Chlor oxidiert, wobei Wasserdampf anfällt. Übliche Reaktionstemperaturen liegen zwischen 150 und 500 °C, übliche Reaktionsdrücke liegen zwischen 1 und 25 bar. Üblicherweise wird Sauerstoff in überstöchiometrischen Mengen eingesetzt. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohen Drücken und dementsprechend bei gegenüber Normaldruck längeren Verweilzeiten zu arbeiten.

Der in dem erfindungsgemäßen Verfahren eingesetzte Katalysator enthält Rutheniumoxid auf Siliziumdioxid, Aluminiumoxid, Titandioxid oder Zirkondioxid als Träger. Bevorzugte Träger sind Siliziumdioxid, Aluminiumoxid und Titandioxid, besonders bevorzugt sind Aluminiumoxid und Titandioxid, insbesondere bevorzugter Träger ist alpha-Aluminiumoxid.

Geeignete Katalysatoren können beispielsweise durch Aufbringen von Rutheniumchlorid auf den Träger und anschließendes Trocknen oder Trocknen und Calcinieren erhalten werden. Geeignete Katalysatoren können zusätzlich noch Verbindungen anderer Edelmetalle, beispielsweise Gold, Palladium, Platin, Osmium, Iridium, Silber, Kupfer oder Rhenium enthalten.

Übliche Reaktionsapparate, in denen die katalytische Chlorwasserstoff-Oxidation durchgeführt wird, sind ein Festbett- oder Wirbelbettreaktor. Die Chlorwasserstoff-Oxidation kann mehrstufig durchgeführt werden.

Die katalytische Chlorwasserstoff-Oxidation kann adiabat oder bevorzugt isotherm oder annähernd isotherm, diskontinuierlich, bevorzugt kontinuierlich, als Fließ- oder Festbettverfahren durchgeführt werden. Bevorzugt wird sie in einem Wirbelschichtreaktor bei einer Temperatur von 320 bis 400 °C und einem Druck von 2 bis 8 bar durchgeführt.

Bei der isothermen oder annähernd isothermen Fahrweise können auch mehrere, also 2 bis 10, bevorzugt 2 bis 6, besonders bevorzugt 2 bis 5, insbesondere 2 bis 3 in Reihe geschaltete Reaktoren mit zusätzlicher Zwischenkühlung eingesetzt werden. Der Sauerstoff kann entweder vollständig zusammen mit dem Chlorwasserstoff vor dem ersten Reaktor oder über die verschiedenen Reaktoren verteilt zugegeben werden. Diese Reihenschaltung einzelner Reaktoren kann auch in einem Apparat zusammengeführt werden.

Eine Ausführungsform besteht darin, dass man in dem Festbettreaktor eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnlich äußere Abmessungen haben.

Als Katalysatorformkörper eignen sich beliebige Formen, bevorzugt sind Tabletten, Ringe, Zylinder, Sterne, Wagenräder oder Kugeln, besonders bevorzugt sind Ringe, Zylinder oder Sternstränge.

Der Katalysator kann auch als Wirbelbettkatalysator in Form von Pulver mit einer mittleren Teilchengröße von 10 bis 200 Mikrometern eingesetzt werden. Bevorzugt wird der Katalysator als Wirbelbettkatalysator eingesetzt.

Die Rutheniumträgerkatalysatoren können beispielsweise durch Tränkung des Trägermaterials mit wässrigen Lösungen von RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Das Trägermaterial kann nach Tränkung und Dotierung bei Temperaturen von 100 bis 500 °C, bevorzugt 100 bis 400 °C beispielsweise unter einer Stickstoff-, Argon- oder Luftatmosphäre getrocknet und gegebenenfalls calciniert werden. Bevorzugt wird zunächst bei 100 bis 200 °C getrocknet und anschließend bei 200 bis 400 °C calciniert.

Das Volumenverhältnis von Chlorwasserstoff zu Sauerstoff am Reaktoreintritt liegt in der Regel zwischen 1:1 und 20:1, bevorzugt zwischen 2:1 und 8:1, besonders bevorzugt zwischen 2:1 und 5:1.

Die Regenerierung des Rutheniumoxid enthaltenden Katalysators wird im Allgemeinen durchgeführt, wenn die Aktivität des Katalysators auf unter 50 %, bevorzugt auf unter 30 % der ursprünglichen Aktivität abgesunken ist.

In einem ersten Schritt a) wird der Katalysator mit einem Gasstrom enthaltend Chlorwasserstoff und gegebenenfalls ein Inertgas bei einer Temperatur von 100 bis 800 °C, bevorzugt von 300 bis 500°C, besonders bevorzugt von 330 bis 450 °C, und insbesondere bevorzugt von 380 bis 430 °C, reduziert. Der Chlorwasserstoff enthaltende Gasstrom kann daneben Inertgase wie Stickstoff oder Argon oder weitere Edelgase enthalten. Im Allgemeinen enthält der Gasstrom mindestens 10 bis 100 Vol.-%, bevorzugt 50 bis 100 Vol.% Chlorwasserstoff. Die Gasbelastung beträgt im Allgemeinen 0,1 bis 1 kg, bevorzugt 0,3 bis 1 kg Gas pro kg Katalysator. Die Behandlungsdauer beträgt beispielsweise 1 bis 36 h. Der Behandlungsdruck beträgt im Allgemeinen 1 bis 5 bar.

In einem Schritt b) wird der Katalysator mit einem Sauerstoff enthaltenden Gasstrom bei einer Temperatur von 100 bis 800°C, bevorzugt von 200 bis 450 °C, besonders bevorzugt 330 bis 400 °C recalciniert. Der Sauerstoffgehalt des Gasstroms beträgt im Allgemeinen 1 bis 100 Vol.-%, bevorzugt 1 bis 30 Vol.%, besonders bevorzugt 10 bis 30 Vol.-%. Der Gasstrom kann neben Sauerstoff Inertgase wie Stickstoff oder Argon oder weitere Edelgase, bevorzugt Stickstoff enthalten. Die Gasbelastung beträgt im Allgemeinen 0,1 bis 1 kg, bevorzugt 0,3 bis 1 kg Gas pro kg Katalysator. Die Behandlungsdauer beträgt beispielsweise 10 bis 120 min.

Gegenstand der Erfindung ist auch ein Verfahren zur Regenerierung eines Chlorwasserstoff-Oxidationskatalysators enthaltend Ruthenium auf einem Trägermaterial aus alpha-Aluminiumoxid, umfassend die Schritte
a) Reduzieren des Katalysators in einem Gasstrom enthaltend Chlorwasserstoff und gegebenenfalls ein Inertgas bei einer Temperatur von 100 bis 800 °C, bevorzugt 300 bis 500°C,
b) Recalcinieren des Katalysators in einem Sauerstoff enthaltenden Gasstrom bei einer Temperatur von 150 bis 800 °C, bevorzugt 200 bis 450°C.

### Beispiele

### Beispiel 1

585 g eines gebrauchten Katalysators (RuO₂ auf α-Al₂O₃) werden in einem Wirbelbettreaktor mit einem Durchmesser von 44 mm, einer Höhe von 990 mm und einer Betthöhe von 300 bis 350 mm bei 400 °C mit 195 NL·h⁻¹ HCl und 97,5 NL·h⁻¹ O₂ betrieben. Der Katalysator liegt in Form eines Pulvers mit einem mittleren Durchmesser von 50 Mikrometern (d₅₀-Wert) vor. Dabei wird ein Chlorwasserstoff-Umsatz von 61 % erhalten. Danach wird für 24 h bei 400 °C der Sauerstoff ausgeschaltet und stattdessen auf 292,5 NL·h⁻¹ HCl umgestellt. Nach 24 h wird wieder auf die ursprünglichen Bedingungen umgestellt und ein HCl-Umsatz von nur 4 % erhalten. Durch Umstellen der Gase auf 60 NL·h⁻¹ O₂ und 240 NL·h⁻¹ N₂ und Recalcinierung über einen Zeitraum von 30 min bei 400 °C wird der Katalysator reaktiviert. Nach dieser Behandlung zeigt der Katalysator bei 400 °C mit 195 NL·h⁻¹ HCl und 97,5 NL·h⁻¹ O₂ einen Umsatz von 83 % bezüglich HCl.

### Beispiel 2

21 kg eines gebrauchten Katalysators (RuO₂ auf α-Al₂O₃) werden in einem Wirbelbettreaktor mit einem Durchmesser von 108 mm, einer Höhe von 4 bis 4,5 m und einer Betthöhe von 2,5 bis 3 m bei 400 °C mit 10,5 kg·h⁻¹ HCl, 4,6 kg·h⁻¹ O₂ und 0,9 N₂ kg·h⁻¹ betrieben. Der Katalysator liegt in Form eines Pulvers mit einem mittleren Durchmesser von 50 Mikrometern (d₅₀-Wert) vor. Dabei wird ein Umsatz des HCl von 77 % erhalten. Danach wird für 20 h bei 400 °C der Sauerstoff ausgeschaltet und stattdessen auf 10,0 kg·h⁻¹ HCl umgestellt. Nach 20 h wird der Katalysator bei 400 °C für 30 min bei 2,0 kg·h⁻¹ O₂ und 8,0 kg·h⁻¹ N₂ wieder recalciniert und so reaktiviert. Nach dieser Behandlung zeigt der Katalysator bei 400 °C mit 10,5 kg·h⁻¹ HCl, 4,6 kg·h⁻¹ O₂ und 0,9 N₂ kg·h⁻¹ einen Umsatz von 84 % bezüglich HCl.

### Beispiel 3

### 1 Gew.-% RuO₂ auf α-Al₂O₃

100 g α-Al₂O₃ (Pulver, d = 50 µm) werden mit 36 mL einer wässrigen Rutheniumchloridlösung (2,1 % bezogen auf Ruthenium) im drehenden Glaskolben getränkt. Der feuchte Feststoff wird 16 h bei 120 °C getrocknet. Der daraus resultierende trockene Feststoff wird für 2 h bei 380 °C unter Luft calciniert.

### Beispiel 4

### 2 Gew.-% RuO₂ auf α-Al₂O₃

100 g α-Al₂O₃ (Pulver, d = 50 µm) werden mit 36 mL einer wässrigen Rutheniumchloridlösung (4,2 % bezogen auf Ruthenium) im drehenden Glaskolben getränkt. Der feuchte Feststoff wird 16 h bei 120 °C getrocknet. Der daraus resultierende trockene Feststoff wird für 2 h bei 380 °C unter Luft calciniert.

### Beispiel 5

### 5 Gew.-% RuO₂ auf α-Al₂O₃

100 g α-Al₂O₃ (Pulver, d = 50 µm) werden mit 36 mL einer wässrigen Rutheniumchloridlösung (10,5 % bezogen auf Ruthenium) im drehenden Glaskolben getränkt. Der feuchte Feststoff wird 16 h bei 120 °C getrocknet. Der daraus resultierende trockene Feststoff wird für 2 h bei 380 °C unter Luft calciniert.

### Beispiel 6

### 2 Gew.-% RuO₂ auf γ-Al₂O₃:

100 g γ-Al₂O₃ (Pulver, d = 50 µm) werden mit 80 mL einer wässrigen Rutheniumchloridlösung (1,9 % bezogen auf Ruthenium) im drehenden Glaskolben getränkt. Der feuchte Feststoff wird 16 h bei 120 °C getrocknet. Der daraus resultierende trockene Feststoff wird für 2 h bei 380 °C unter Luft calciniert.

### Beispiel 7

### 2 Gew.-% RuO₂ auf TiO₂ (Rutil):

100 g TiO₂ (Rutil, Pulver, d = 33 µm) werden mit 73 mL einer wässrigen Rutheniumchloridlösung (2,1 % bezogen auf Ruthenium) im drehenden Glaskolben getränkt. Der feuchte Feststoff wird 16 h bei 120 °C getrocknet. Der daraus resultierende trockene Feststoff wird für 2 h bei 380 °C unter Luft calciniert.

### Beispiel 8

### 2 Gew.-% RuO₂ auf SiO₂:

100 g SiO₂ (Pulver, d = 60 µm) werden mit 90 mL einer wässrigen Rutheniumchloridlösung (1,7 % bezogen auf Ruthenium) im drehenden Glaskolben getränkt. Der feuchte Feststoff wird 16 h bei 120 °C getrocknet. Der daraus resultierende trockene Feststoff wird für 2 h bei 380 °C unter Luft calciniert.

### Beispiele 9 bis 15

### Testung der Frischkatalysatoren:

Jeweils 2 g der Katalysatoren gemäß Beispielen 3 - 8 werden mit 118 g des entsprechenden Trägermaterials als Inertmaterial gemischt und werden in einem Wirbelschichtreaktor (d = 29 mm; Höhe des Wirbelbettes 20 bis 25 cm) bei 360 °C mit 9,0 NL/h HCl und 4,5 NL/h O₂ von unten über eine Glasfritte durchströmt. Der HCl-Umsatz wird durch Einleiten des resultierenden Gasstromes in eine Kaliumiodidlösung und anschließender Titration des entstandenen lods mit einer Natriumthiosulfatlösung bestimmt. Der mit dem Katalysator gemäß Beispiel 1 enthaltend 1 Gew.-% RuO₂ auf α-Al₂O₃ erzielte HCl-Umsatz beträgt 19,0 % und wird zu Vergleichszwecken einer Aktivität von 1,0 zugeordnet. Enthält ein Katalysator mehr als die 1,0 Gew.-% RuO₂ des Vergleichskatalysators, so wird die Aktivität auf einen RuO₂-Gehalt von 1,0 Gew.-% normiert.

### Künstliche Alterung und Testung:

20 g der Frischkatalysatoren werden in einem Muffelofen unter Luft bei 450 °C für 12 h künstlich gealtert. Die so erhaltenen gealterten Katalysatoren werden ebenfalls wie oben beschrieben bezüglich der Aktivität untersucht.

### Regeneration im Festbett:

6,5 mL der gealterten Katalysatoren werden in einem Festbett (L = 25 cm; d = 6 mm) bei 400 °C für 24 h mit 3 NL/h HCl behandelt und anschließend für 1 h unter Luftatmosphäre bei 360 °C calciniert. Der so erhaltene regenerierte Katalysator wird wie oben beschrieben bezüglich der Aktivität untersucht.

Die Ergebnisse sind in Tabelle 1 zusammengefasst:

**Tabelle 1**

| **RuO₂ [Gew.-%]** | **Träger** | **Aktivität des frischen Katalysators [-]** | **Aktivität des gealterten Katalysators [-]** | **Aktivität des regenerierten Katalysators [-]** |
|---|---|---|---|---|
| 1 | *α*-Al₂O₃ | 1,00 | 0,46 | 0,72 |
| 2 | *α*-Al₂O₃ | 1,95 | 0,24 | 1,13 |
| 5 | *α*-Al₂O₃ | 1,79 | 0,30 | 0,64 |
| 2 | *γ*-Al₂O₃ | 0,90 | 0,30 | 0,55 |
| 2 | Microrutil | 0,68 | 0,25 | 0,52 |
| 2 | SiO₂ | 0,73 | 0,27 | 0,42 |

Wie der Tabelle zu entnehmen ist, liefert die Regeneration sowohl bei unterschiedlichen RuO₂-Beladungen als auch mit verschiedenen Trägern gute Ergebnisse.

### Beispiel 16

### Regeneration mit einem Gemisch aus 50 % N₂ und 50 % HCl

585 g eines frischen Katalysators (2 % RuO₂ auf *α*-Al₂O₃) werden bei 380 °C mit 195,0 NL·h⁻¹ HCl und 97,5 NL·h⁻¹ O₂ betrieben. Dabei wird ein Umsatz des HCl von 74 % erhalten. Im Anschluss daran wird der Gasfluss auf 150 NUh N₂ und 20 NL/h O₂ umgeschaltet und der Katalysator für 68 h bei 430 °C gealtert. In diesem Zustand bewirkt der Katalysator bei 380 °C mit 195,0 NL·h⁻¹ HCl und 97,5 NL·h⁻¹ O₂ einen HCl-Umsatz von 64 %. Danach wird der Katalysator 12 h bei 400 °C unter 300 NL·h⁻¹ eines Gemisches aus 50 % N₂ und 50 % HCl betrieben. Nach 12 h wird die Temperatur auf 400 °C eingestellt und der Katalysator unter 300 NL/h Luft für 30 min kalziniert. Nach dieser Behandlung zeigt der Katalysator bei 380 °C mit 195,0 NL·h⁻¹ HCl und 97,5 NL·h⁻¹ O₂ einen Umsatz von 78 % bezüglich HCl. Die Regeneration des gealterten Katalysators liefert also auch mit Gemischen aus HCl und Inerten gute Ergebnisse.

## Patentansprüche

1. Verfahren zur katalytischen Chlorwasserstoffoxidation mit den Schritten
i) Einspeisung eines Chlorwasserstoff enthaltenden Stroms und eines Sauerstoff enthaltenden Stroms in einen Oxidationsreaktor, der einen Chlorwasserstoff-Oxidationskatalysator enthaltend Rutheniumoxid auf einem Trägermaterial enthält, und Oxidation von Chlorwasserstoff zu Chlor an dem Katalysator, bis der Katalysator eine verringerte Aktivität aufweist,
ii) Regenerierung des Katalysators umfassend die Schritte.
a) Reduzieren des Katalysators mit einem Gasstrom enthaltend Chlorwasserstoff und gegebenenfalls ein Inertgas bei einer Temperatur von 100 bis 800 °C,
b) Recalcinieren des Katalysators mit einem Sauerstoff enthaltenden Gasstrom bei einer Temperatur von 150 bis 800 °C,
iii) Fortsetzung der Oxidation von Chlorwasserstoff zu Chlor entsprechend Schritt i) an dem in Schritt ii) erhaltenen regenerierten Katalysator.

2. Verfahren nach Anspruch 1, **dadurch gekennzeichnet, dass** Schritt a) bei 330 bis 450°C und Schritt b) bei 200 bis 450°C durchgeführt wird.

3. Verfahren nach Anspruch 1 oder 2, **dadurch gekennzeichnet, dass** der Chlorwasserstoff enthaltende Gasstrom 10 bis 100 Vol-% Chlorwasserstoff enthält.

4. Verfahren nach Anspruch 3, **dadurch gekennzeichnet, dass** der Chlorwasserstoff enthaltende Gasstrom Stickstoff als Inertgas enthält.

5. Verfahren nach einem der Ansprüche 1 bis 4, **dadurch gekennzeichnet, dass** der Sauerstoff enthaltende Gasstrom 1 bis 100 Vol-% Sauerstoff enthält.

6. Verfahren nach einem der Ansprüche 1 bis 5, **dadurch gekennzeichnet, dass** der Katalysator Rutheniumoxid auf einem Trägermaterial, ausgewählt aus der Gruppe bestehend aus Oxiden von Aluminium, Silizium und Titan, enthält.

7. Verfahren nach einem der Anspruch 6, **dadurch gekennzeichnet, dass** das Trägermaterial alpha-Aluminiumoxid ist.

8. Verfahren nach einem der Ansprüche 1 bis 7, **dadurch gekennzeichnet, dass** die Schritte i) bis iii) in demselben Reaktor durchgeführt werden.

9. Verfahren nach einem der Ansprüche 1 bis 8, **dadurch gekennzeichnet, dass** das Verfahren in einem Wirbelbettreaktor durchgeführt wird.

10. Verfahren zur Regenerierung eines Chlorwasserstoff-Oxidationskatalysators enthaltend Rutheniumoxid auf einem Trägermaterial aus alpha-Aluminiumoxid, umfassend die Schritte
a) Reduzieren des Katalysators in einem Gasstrom enthaltend Chlorwasserstoff und gegebenenfalls ein Inertgas bei einer Temperatur von 100 bis 800 °C,
b) Recalcinieren des Katalysators mit einem Gasstrom aus Sauerstoff und gegebenenfalls einem Inertgas bei einer Temperatur von 150 bis 800 °C,
wobei die Schritte a) und b) direkt nacheinander durchgeführt werden.

## Claims

1. A process for the catalytic oxidation of hydrogen chloride, which comprises the steps
i) introduction of a stream comprising hydrogen chloride and an oxygen-comprising stream into an oxidation reactor comprising a hydrogen chloride oxidation catalyst comprising ruthenium oxide on a support material and oxidation of hydrogen chloride to chlorine over the catalyst until the catalyst has a reduced activity,
ii) degeneration of the catalyst, which comprises the steps
a) redaction of the catalyst in a gas stream comprising hydrogen chloride and optionally an inert gas at a temperature of from 100 to 800°C,
b) recalcination of the catalyst in an oxygen-comprising gas stream at a temperature of from 150 to 800°C,
iii) continuation of the oxidation of hydrogen chloride to chlorine according to step i) over the regenerated catalyst obtained in step ii).

2. The process according to claim 1, wherein step a) is carried out at from 330 to 450°C and step b) is tarried out at from 200 to 450°C.

3. The process according to claim 1 or 2, wherein the gas stream comprising hydrogen chloride comprises from 10 to 100% by volume of hydrogen chloride.

4. The process according to claim 3, wherein the gas stream comprising hydrogen chloride comprises nitrogen as inert gas.

5. The process according to any of claims 1 to 4, wherein the oxygen-comprising gas stream comprises from 1 to 100% by volume of oxygen.

6. The process according to any of claims 1 to 5, wherein the catalyst comprises Ruthenium oxide on a support material selected from the group consisting of oxides of aluminum, silicon and titanium.

7. The process according to claim 6, wherein the support material is alpha-aluminum oxide.

8. The process according to any of claims 1 to 7, wherein steps i) to iii) are carried out in the same reactor.

9. The process according to any of claims 1 to 8, wherein the process is carried out in a fluidized-bed reactor.

10. A process for regenerating a hydrogen chloride oxidation catalyst comprising Ruthenium oxide on a support material consisting of alpha-aluminum oxide, which comprises the steps
a) reduction of the catalyst in a gas stream comprising hydrogen chloride and optionally an inert gas at a temperature of from 100 to 800°C,
b) recalcination of the catalyst in a gas stream consisting of oxygen and optionally an inert gas at a temperature of from 150 to 800°C,
steps a) and b) being carried out directly after one another.

## Revendications

1. Procédé d'oxydation catalytique de chlorure d'hydrogène, comprenant les étapes suivantes :
i) l'introduction d'un courant contenant du chlorure d'hydrogène et d'un courant contenant de l'oxygène dans un réacteur d'oxydation, qui contient un catalyseur d'oxydation de chlorure d'hydrogène contenant de l'oxyde de ruthénium sur un matériau support, et l'oxydation du chlorure hydrogène en chlore sur le catalyseur jusqu'à ce que le catalyseur présente une activité réduite,
ii) la dégénération du catalyseur comprenant les étapes suivantes :
a) la rédaction du catalyseur avec un courant gazeux contenant du chlorure d'hydrogène et éventuellement un gaz inerte à une température de 100 à 800 °C,
b) la recalcination du catalyseur avec un courant gazeux contentant de l'oxygène à une température de 150 à 800 °C,
iii) la poursuite de l'oxydation du chlorure d'hydrogène en chlore selon l'étape i) sur le catalyseur dégénéré obtenu à l'étape ii).

2. Procédé selon la revendication 1, **caractérisé en ce que** l'étape a) est réalisée à une température de 330 à 450 °C et l'étape b) à une température de 200 à 450 °C.

3. Procédé selon la revendication 1 ou 2, **caractérisé en ce que** le courant gazeux contenant du chlorure d'hydrogène contient 10 à 100 % en volume de chlorure d'hydrogène.

4. Procédé selon la revendication 3, **caractérisé en ce que** le courant gazeux contenant du chlorure d'hydrogène contient de l'azote en tant que gaz inerte.

5. Procédé selon l'une quelconque des revendications 1 à 4, **caractérisé en ce que** le courant gazeux contenant de l'oxygène contient 1 à 100 % en volume d'oxygène.

6. Procédé selon l'une quelconque des revendications 1 à 5, **caractérisé en ce que** le catalyseur contient de l'oxyde de ruthénium sur un matériau support choisi dans le groupe constitué par les oxydes d'aluminium, de silicium et de tatane.

7. Procédé selon la revendication 6, **caractérisé en ce que** le matériau support est l'oxyde d'aluminium alpha.

8. Procédé selon l'une quelconque des revendications 1 à 7, **caractérisé en ce que** les étapes i) à iii) sont réalisées dans un même réacteur.

9. Procédé selon l'une quelconque des revendications 1 à 8, **caractérisé en ce que** le Procédé est réalisé dans un réacteur à lit fluidisé.

10. Procédé de régénération d'un catalyseur d'oxydation de chlorure d'hydrogène contenant de l'oxyde de ruthénium sur un matériau support en oxyde d'aluminium alpha, comprenant les étapes suivantes :
a) la réduction du catalyseur dans un courant gazeux contenant du chlorure d'hydrogène et éventuellement un gaz inerte à une température de 100 à 800 °C,
b) la recalcination du catalyseur avec un courant gazeux constitué d'oxygène et éventuellement d'un gaz inerte à une température de 150 à 800 °C,
les étapes a) et b) étant réalisées directement l'une après l'autre.
